# EUROPEAN PATENT SPECIFICATION

(11) **EP 1 816 693 B1**
(45) Date of publication and mention of the grant of the patent: **16.03.2011**
(21) Application number: 05806142.5
(22) Date of filing: 08.11.2005
(51) Int. Cl.: H01M 4/68, H01M 4/73, H01M 4/74, H01M 2/28

(54) **NEGATIVE ELECTRODE CURRENT COLLECTOR FOR LEAD STORAGE BATTERY AND LEAD STORAGE BATTERY INCLUDING THE SAME**
NEGATIVELEKTRODEN-STROMKOLLEKTOR FÜR EINE BLEIBATTERIE UND BLEIBATTERIE DAMIT
COLLECTEUR DE COURANT D'ELECTRODE NEGATIVE POUR BATTERIE AU PLOMB ET BATTERIE AU PLOMB INCLUANT CELUI-CI

(30) Priority: 08.11.2004 JP 2004324343
(43) Date of publication of application: 08.08.2007
(73) Proprietor: GS Yuasa International Ltd., Kisshoin Minami-ku, Kyoto-shi (JP)
(72) Inventor: TSUBOI, Yuichi, c/o GS YUASA CORPORATION,, Kyoto-shi, Kyoto 601-8520 (JP)
(74) Representative: Müller-Boré & Partner Patentanwälte
(86) International application number: PCT/JP2005/020422
(87) International publication number: WO 2006/049295

(56) References cited:
- JP-A- 03 105 861
- JP-A- 03 205 762
- JP-A- 63 237 358
- JP-B2- 63 029 385

## Description

### Technical Field

The present invention relates to a negative electrode current collector for a lead-acid battery.

### Background Art

Lead-acid batteries date back more than 100 years. Although new secondary batteries such as nickel-hydrogen batteries and lithium-ion batteries have recently been developed, lead-acid batteries are constantly in high demand such as for automobiles and backup due to their stability and cost performance.

Lead-acid batteries are classified into valve regulated lead-acid batteries and open type lead-acid batteries from a viewpoint of their structure. In a valve regulated lead-acid battery, electrolyte solution is impregnated or maintained by a positive plate, negative plate, and separator. There is little free electrolyte solution. A vent valve is mounted on a part called electrolyte solution filling opening or valve seat. Meanwhile, in open type lead-acid battery, there is enough electrolyte solution and the inside of a storage battery is communicated to outer air through an exhaust opening.

In both types of lead-acid battery, a current collector made of lead or lead alloy is used as a positive electrode and negative electrode of a lead-acid battery. Generally, this current collector is manufactured by gravity casting method, expanding method or punching method.

In general, a current collector is substantially square-shaped plate. At the upper part, an "upper frame part" is formed lengthwise from side to side. A "grid part" is connected to the upper frame part. Further, an upper frame part has a part that juts out upside. This projecting portion is called "lug part".

Lead dioxide that functions as an active material is held by a current collector for a positive electrode. A spongy metal lead that functions as an active material is held by a current collector for a negative electrode. Current collectors holding lead dioxide or metal lead are sandwiched or wound with separators and contained in a container. A lead-acid battery is manufactured by filling electrolyte solution consisting primarily of dilute sulfuric acid aqueous solution in the container.

### Disclosure of the Invention

### Problems to be resolved by the invention

The capacity (hereinafter referred to as service capacity) that can be discharged by a lead-acid battery gets smaller as the lead-acid battery is used. If the service capacity of a lead-acid battery gets smaller, original service capacity cannot be obtained from the lead-acid battery resulting in a problem in using the lead-acid battery. Therefore, lead-acid batteries with an excellent cycle life performance are requested in the market. Service capacity getting smaller is generally called "cycle life deterioration." "Indicating excellent cycle life performance" means that the service capacity hardly gets smaller.

It is known that the cycle life deterioration is caused by various factors. However, even now, not all factors that generate the cycle life deterioration are known. Additionally, it is difficult to think that an already apparent factor solely affects the cycle life deterioration. It is supposed that multiple factors intricately-intertwined with one another to affect the cycle life deterioration. Factors that are known currently for deteriorating the cycle life include:

### (1) Corrosion of positive electrode current collector

A positive electrode current collector always contacts a positive electrode active material with higher potential even if the circuit is open. Therefore, a positive electrode current collector is in the corrosion environment all the time. When a lead-acid battery is charged, charge overvoltage is added and corrosion is further accelerated. If corrosion proceeds, power collection function and active material retention function, etc of a positive electrode current collector are reduced resulting in smaller service capacity of a lead-acid battery.

### (2) Softening of positive electrode active material

Accompanying charge and discharge, crystallization of Pb02 particles (an active material) proceeds, particles get larger and smoother resulting in network disruption among active material particles. As a result, conductive property of the active material itself falls or active material removes from a current collector resulting in reduced service capacity.

### (3) Degradation of negative electrode active material

Accompanying charges and discharges, expander added into negative electrode active material decreases and is degraded, specific surface area of active material is reduced. Additionally, if a battery is often used with little charge, a poor conductive property, lead sulfate, which is difficult to be charged, is accumulated. The phenomenon is called sulfation. As a result, service capacity falls.

### (4) Short circuit

Extension of positive electrode current collector may cause short circuit. Additionally, removal of active material may cause short circuit at the bottom of a lead-acid battery. These short circuits end cycle life of a lead-acid battery.

Additionally, a lead-acid battery is charged and discharged repeatedly, minute positive electrode active materials removed from a positive plate float in electrolyte solution due to gas generated when charging and sometimes adhere to a lug part and upper frame part of a negative plate. If this adherence proceeds, spongy lead accumulates. This spongy lead is called moss. If the moss continues to accumulate, it reaches the positive plate and may cause short circuit. By this, cycle life deterioration occurs in a lead-acid battery. This problem, for example, is disclosed in Japanese published unexamined application 8-203554.

### (5) Electrolyte solution dry up

Generally, substances such as antimony that lower hydrogen overvoltage are not added in manufacturing sealed lead acid batteries. If lead-antimony alloys are used in positive electrode current collector of sealed lead acid batteries, as the cycle of charges and discharges progresses, antimony in the positive electrode current collector may dissolve in electrolyte solution and be deposited on negative electrode active material. Thus, if antimony is deposited on the negative electrode, hydrogen is generated from the negative electrode earlier than oxygen is absorbed on negative electrode when charging a sealed lead-acid battery because antimony has lower hydrogen overvoltage than lead. In the situation, so-called gas recombination reaction of the sealed lead-acid battery does not occur. Specific gravity of electrolyte solution rises as the amount of electrolyte solution decreases. Eventually, cycle life performance gets worse.

### (6) Poor connection

Conventionally, Pb-Sb alloys have been used for current collectors of lead-acid batteries. However, recently, people started using Pb-Ca-Sn alloys because lead-acid batteries have become maintenance-free.

Characteristics of electrolyte solution decrease of lead-acid batteries using a current collector made of Pb-Ca-Sn alloys are superior to that of a current collector made of Pb-Sb alloys. However, adhesion characteristics of lead-acid batteries using a current collector made of Pb-Ca-Sn alloys is inferior to that of current collectors made of Pb-Sb alloys. The term, adhesion used here is an adhesion between the lug part of a current collector and strap.

If the lug part of a negative electrode current collector adheres poorly to the strap, the following troubles occur. Specifically, the electrolyte solution in a lead-acid battery decreases if the lead-acid battery is exposed to a hot environment or overcharged. At this time, if the interface between the strap and the lug part cannot be kept immersed in the electrolyte solution, the interface between the strap and lug part corrodes. This corrosion seems to be generated from the gap between the lug part and strap.

For solving this problem, inventions are disclosed in Japanese published unexamined application Nos. 1983-225568, 1988-237354, 1996-236101, 1996-17460, 1996-17461, 1996-185853 and 1999-329399. More specifically, installation of layers such as Pb·Sn alloy on the lug part in order to welding property between the lug part and strap are proposed.

It is an object of the present invention to prevent the degradation of lead-acid battery life due to the factors shown above. It is another object of the present invention to alleviate cycle life deterioration caused by various factors, and to provide a battery with a service capacity that hardly becomes small even if the lead-acid battery is used, in other words, a lead-acid battery with an excellent cycle life performance.

### Means of solving the problems

A negative electrode current collector for a lead-acid battery according to the present invention has grid part, upper frame part, and lug part, where the upper frame part and lug part has a surface layer, the surface layer is an alloy of Pb and Sn and the mass ratio of Sn accounts for 10% or more in the whole alloy, an alloy of Pb and Sb and the mass ratio of Sb accounts for 10% or more in the whole alloy, an alloy of Pb, Sn and Sb and the total mass ratio of Sn and Sb accounts for 10% or more in the whole alloy, Sn, or Sb.

If a lead-acid battery is manufactured from any one of these negative electrode current collectors, cycle life deterioration of the lead-acid battery is suppressed. In other words, cycle life performance of a lead-acid battery increases significantly. It is unknown which factor the present invention impacts positively on among ones that shorten the battery life. However, as shown in the embodiments below, it is apparent that the present invention improves the cycle life performance.

When performing the present invention, if a surface layer is installed only on the upper frame part, no significant effect is obtained. In the same way, if a surface layer is installed only on the lug part, no significant effect is obtained, either. Therefore, it is important to install a surface layer both on the upper frame part and on the lug part.

The rolling method and hot-dip plating method are known to install a surface layer on the upper frame part or on the lug part. In the rolling method, a metal or alloy foil to be a surface layer is overlapped on a material to be overlapped with the surface layer (e.g., metal plate and alloy board) and they are extended by applying pressure. Meanwhile, in the hot-dip plating method, a material (e.g., an upper frame part or a lug part of a negative electrode current collector) to be plated is immersed into a melting basin containing melted material to be a surface layer.

In this invention, it is important for this electrode current collector with a grid part, upper frame part, and lug part to have only upper frame part and lug part only have a surface layer.

Conventionally, inventions that only a lug part has a surface layer have been disclosed. Those inventions are for readily welding a lug part and strap. Therefore, the disclosures do not motivate an upper frame part to have a surface layer because the upper frame part is not related to welding to strap.

If a lead-acid battery is manufactured by using a negative electrode current collector in which upper frame part and lug part only have a surface layer, the cycle life deterioration of a lead-acid battery is suppressed. In other words, if the present invention is performed, the cycle life performance of a lead-acid battery improves significantly. It is unknown which factor the present invention impacts positively on among ones that shorten the battery life. However, as shown in the embodiments below, it is apparent that the present invention improves the cycle life performance.

Preferably, the thickness of a surface layer according to the present invention is 5 to 200 microns (further preferably 10 to 60 microns). If the thickness is too small, the effect to prevent the reduction of cycle life performance gets smaller. On the contrary, if the thickness is too large, lead-acid battery gets larger and heavier because negative the electrode current collector is thick.

If a surface layer is attached to an upper frame part, it is preferable to cover all surface of the upper frame part. For example, if hot-dip plating method is adopted, a surface layer cover entire surface of an upper frame part. However, it has been apparent that a surface layer need not cover entire surface of the upper frame part. If a surface layer is layered by the rolling method, the surface layer is layered on one side or both sides of an upper frame part, and not layered on the edge face of the upper frame part. However, also in this case, an effect to improve the cycle life performance is obtained from the result of embodiment 1 shown below.

Likewise, if a surface layer is layered on a lug part, the surface layer preferably covers the entire surface of the lug part. For example, if the hot-dip plating method is used, a surface layer covers the entire surface of a lug part. However, it has been apparent that a surface layer need not cover the entire surface of a lug part. If a surface layer is layered by the rolling method, the surface layer is layered on one side or both sides of an upper frame part, and not layered on the edge face of the upper frame part. However, also in this case, an effect to improve the cycle life performance is obtained from the result of embodiment 1 shown below.

A negative electrode current collector for a lead-acid battery according to the present invention where only upper frame part and lug part has a surface layer, the surface layer is an alloy of Pb and Sn and the mass ratio of Sn accounts for 10% or more in the whole alloy, an alloy of Pb and Sb and the mass ratio of Sb accounts for 10% or more in the whole alloy, an alloy of Pb, Sn and Sb and the total mass ratio of Sn and Sb accounts for 10% or more in the whole alloy, Sn, or Sb.

Any one of composition of the surface layer can further improve the cycle life performance of a lead-acid battery.

In a negative electrode current collector for a lead-acid battery according to the present invention, an upper frame part and a lug part are equipped with a surface layer, a part other than an upper frame part and a lug part has a surface layer (this surface layer is called second surface layer for distinguishing the surface layer on the upper frame part and lug part), the area covered with the surface layer (the second surface layer) accounts for 20% or less to the surface area except the upper frame part and lug part.

If it is assumed that the surface area of the entire negative electrode current collector excluded by a lug part and upper frame part of the negative electrode current collector is S, the upper frame part and lug part of the present invention has a surface layer and 20% or less of S has the surface layer.

The part of a negative electrode current collector other than upper frame part and lug part does not have preferably a surface layer. However, in some cases, it is difficult to manufacture a negative electrode current collector with no surface layer. As in the present invention, the area having the second surface layer accounts for 20% or less in the surface area other than an upper frame part and lug part, the effect of the present invention was not reduced. In other words, a lead-acid battery manufactured by using this type of negative electrode current collector showed excellent cycle life performance.

The terms "area" or "surface area" used here are the "area" or "surface area" when the surface of a negative electrode current collector is flat and smooth. In other words, if there are minute irregularities on a negative electrode current collector, the irregularities are not considered.

### Brief description of the drawings

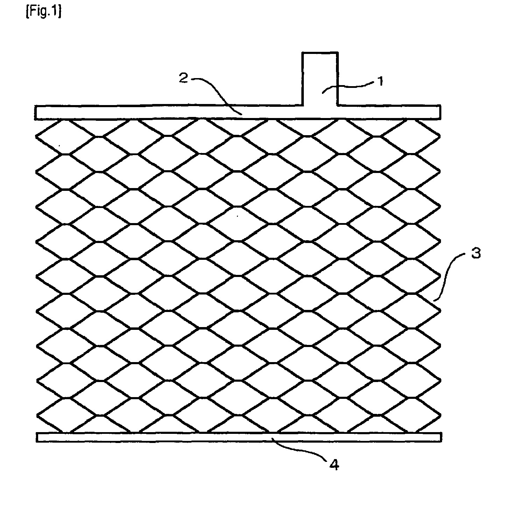

Fig.1 is a pattern diagram of a current collector manufactured by expanding method; and

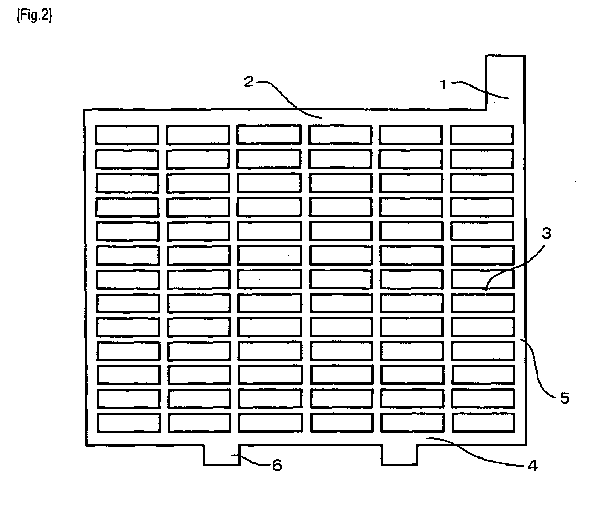

Fig.2 is a pattern diagram of current collector manufactured by gravity casting method.

### Explanation of numerals

1 Lug part
2 Upper frame part
3 Grid part
4 Lower frame part
5 Side frame part
6 Foot part

### Best Mode for carrying out the Invention

### (1) The items common to embodiments shown below will be explained first.

### (1.1) Method to install a surface layer

The rolling method and hot-dip plating method were used to install a surface layer.

The rolling method is performed in the following method. The composition of an alloy that is a base material of a negative electrode current collector was Pb-0.05%Ca-0.5%Sn was used. The description of Pb-0.05%Ca-0.5%Sn means a lead alloy containing 0.05% of calcium by mass, 0.5% of tin by mass. In this case, it does not mean that the lead does not contain any impurity. The thickness of the base material that is an alloy board is 10mm. On the both surface of the alloy board, a tin sheet, antimony sheet and various alloy sheets with thickness of 0.5mm to be surface layers were layered. They were extended with a mill roller. By this, a rolled sheet with thickness of 1.0mm was manufactured. The thickness of surface layer was approximately 50 microns. Then, the rolled sheet was deployed with a reciprocal type expanding machine so that a surface layer is positioned on a desired position on the negative electrode current collector by adjusting the position of the rolled sheet (expanding method). By this, a negative electrode current collector with a surface layer at a prescribed position was manufactured. Meantime, in the rolling method, the thickness of a surface layer can be adjusted by adjusting the thickness of an alloy to be a base material, the thickness of a sheet to be a surface layer and the thickness of the sheet after rolling.

The hot-dip plating method is performed in the following procedures. A melting basin containing metals or alloys to be a surface layer was prepared. Specifically, the basin contained alloys such as Sn, Sb, or Pb-50%Sn. An upper frame part and lug part were immersed in the melting basin. A surface layer was generated by the conventional so-called plating method. At this time, a negative electrode current collector may be manufactured in any method. In other words, a negative electrode current collector may be manufactured by gravity casting method or expanding method. The position of the surface layer can be changed by changing the position of the negative electrode current collector to be immersed in the melting basin. The thickness of the surface layer obtained by this method was 0.15mm. If a surface layer covers a part that should not be covered, the surface layer can be removed by polishing the surface of the metal.

### (1.2) Manufacturing method of a negative plate

A paste for negative plate was filled into the negative electrode current collector with a surface layer obtained by the method shown above. The paste for negative plate contained lead powder consisting mainly of lead oxide added and mixed with lignin, barium compound, carbon and a given amount of dilute sulfuric acid. An unformed negative plate for 80D26 was obtained by curing a negative electrode current collector filled with a negative plate paste for three days at 35°C.

### (1.3) Manufacturing method of positive plate

Positive electrode current collector manufactured by the expand method was used for positive plate. The positive electrode current collector was made of an alloy of Pb-0.05%Ca-1.0%Sn. A positive plate paste was filled into this positive electrode current collector. The positive plate paste contained lead powder consisting mainly of lead oxide mixed with a given amount of dilute sulfuric acid. An unformed negative plate for 80D26 was obtained by curing a positive electrode current collector filled with a negative plate paste for three days at 35°C.

### (1.4) Manufacturing method of separator

A separator made of polyethylene resin manufactured by extrusion method was folded into two. Two sides were sealed mechanically. By this, a sack-like separator with only one side being opening was obtained.

### (1.5) A method to form an unformed element and manufacture a lead-acid battery

A negative plate was contained in a sack-like separator. An unformed element is formed by layering in alternate shifts seven positive plates and eight negative plates put in the separator. The unformed element was inserted into a container for 80D26 and the lid wad welded. A dilute sulfuric acid with predefined specific gravity was filled into the container. Then, a container formation (electrical quantity: 280% of theoretical capacity of positive electrode active material, formation time : 18 hours) was performed in a water tank at 25°C. A lead-acid battery (nominal voltage : 12V, rated capacity : 55Ah) with size of 80D26 stipulated in JIS D 5301 was manufactured.

### (1.6) An experimental method for manufactured lead-acid battery

Lead dioxide powder (4g) was mixed into the manufactured lead-acid battery in advance. By this, moss is likely to adhere to or accumulated on a lug part and upper frame part. In other word, this makes significant difference in cycle life performance of each lead-acid battery.

A shallow cycle endurance test specified in JIS D 5301 was performed on the lead-acid batteries. Three lead-acid batteries per type were tested. A battery was considered to come to the end of its life when 30 second voltage at discharge of test discharge performed every 480 cycle was less than 7.2V or the voltage when discharging 25A was lower than 9.0V The cycle number of a battery with shortest life among three lead-acid batteries was considered lowest life cycle number.

### (2) Embodiment 1

Negative electrode current collectors equipped a surface layer by rolling method were manufactured. The parts of a negative electrode current collector to have a surface layer were varied. Various materials were used for manufacturing surface layers of negative electrode current collectors. Further, negative electrode current collectors equipped with a surface layer by the hot-dip plating method were manufactured. Table 1, 2 and 3 show the overview of various negative electrode current collectors manufactured by the method shown above. Lead-acid batteries were manufactured by using these negative electrode current collectors.

The description of Pb-0.05%Ca-0.5%Sn means a lead alloy containing 0.05% of calcium by weight and 0.5% of tin by weight. In this case, it does not mean that lead contain no impurity. That is the same in other tables.

The description "O" in the table means that each part of a negative electrode current collector is covered with a surface layer. Meanwhile, the description "X" in the table means that no part of a negative electrode current collector is covered with a surface layer. That is the same in other tables.

**Table 1**

| | Negative electrode current collector | | Surface layer | | | | | | Cycle life performance |
|---|---|---|---|---|---|---|---|---|---|
| | Manufacturing method | Alloy composition | Composition | Method to form surface layer | Lug part | Upper frame part | Grid part | Lower frame part | |
| A01 | Expanding method | Pb-0.05%Ca-0.5%Sn | Sn | Rolling method | O | X | X | X | 125 |
| A02 | | | | | X | O | X | X | 130 |
| A03 | | | | | X | X | O | X | 128 |
| A04 | | | | | X | X | X | O | 126 |
| A05 | | | | | O | O | X | X | 352 |
| A06 | | | | | O | X | O | X | 118 |
| A07 | | | | | X | O | X | O | 115 |
| A08 | | | | | X | X | O | O | 105 |
| A09 | | | | | X | O | O | O | 106 |
| A10 | | | | | O | O | O | O | 112 |
| B01 | Expanding method | Pb-0.05%Ca-0.5%Sn | Sn | Hot-dip plating method | O | X | X | X | 125 |
| B02 | | | | | X | O | X | X | 130 |
| B03 | | | | | X | X | O | X | 126 |
| B04 | | | | | X | X | X | O | 127 |
| B05 | | | | | O | O | X | X | 358 |
| B06 | | | | | O | X | O | X | 119 |
| B07 | | | | | X | O | X | O | 114 |
| B08 | | | | | X | X | O | O | 106 |
| B09 | | | | | X | O | O | O | 106 |
| B10 | | | | | O | O | O | O | 111 |

**Table 2**

| | Negative electrode current collector | | Surface layer | | | | | | Cycle life performance |
|---|---|---|---|---|---|---|---|---|---|
| | Manufacturing method | Alloy composition | Composition | Method to form surface layer | Lug part | Upper frame part | Grid part | Lower frame part | |
| C01 | Expanding method | Pb-0.05%Ca-0.5%Sn | Sb | Rolling method | O | X | X | X | 114 |
| C02 | | | | | X | O | X | X | 134 |
| C03 | | | | | X | X | O | X | 128 |
| C04 | | | | | X | X | X | O | 127 |
| C05 | | | | | O | O | X | X | 346 |
| C06 | | | | | O | X | O | X | 116 |
| C07 | | | | | X | O | X | O | 115 |
| C08 | | | | | X | X | O | O | 103 |
| C09 | | | | | X | O | O | O | 105 |
| C10 | | | | | O | O | O | O | 110 |
| D01 | Expanding method | Pb-0.05%Ca-0.5%Sn | Sb | Hot-dip plating method | O | X | X | X | 114 |
| D02 | | | | | X | O | X | X | 134 |
| D03 | | | | | X | X | O | X | 126 |
| D04 | | | | | X | X | X | O | 129 |
| D05 | | | | | O | O | X | X | 340 |
| D06 | | | | | O | X | O | X | 117 |
| D07 | | | | | X | O | X | O | 114 |
| D08 | | | | | X | X | O | O | 104 |
| D09 | | | | | X | O | O | O | 106 |
| D10 | | | | | O | O | O | O | 109 |

**Table 3**

| | Negative electrode current collector | | Surface layer | | | | | | Cycle life performance |
|---|---|---|---|---|---|---|---|---|---|
| | Manufacturing method | Alloy composition | Composition | Method to form surface layer | Lug part | Upper frame part | Grid part | Lower frame part | |
| E01 | Expanding method | Pb-0.05%Ca-0.5%Sn | Pb-5%Sn | Rolling method | O | O | X | X | 238 |
| E02 | | | Pb-8%Sn | | O | O | X | X | 239 |
| E03 | | | Pb-10%Sn | | O | O | X | X | 320 |
| E04 | | | Pb-30%Sn | | O | O | X | X | 322 |
| E05 | | | Pb-50%Sn | | O | O | X | X | 326 |
| E06 | | | Pb-70%Sn | | O | O | X | X | 330 |
| F01 | Expanding method | Pb-0.05%Ca-0.5%Sn | Pb-5%Sb | Rolling method | O | O | X | X | 218 |
| F02 | | | Pb-8%Sb | | O | O | X | X | 219 |
| F03 | | | Pb-10%Sb | | O | O | X | X | 343 |
| F04 | | | Pb-30%Sb | | O | O | X | X | 342 |
| F05 | | | Pb-50%Sb | | O | O | X | X | 348 |
| F06 | | | Pb-70%Sb | | O | O | X | X | 350 |
| G01 | Expanding method | Pb-0.05%Ca-0.5%Sn | Pb-5%Sn-5%Sb | Rolling method | O | O | X | X | 339 |
| G02 | | | Pb-10%Sn-0.05%Ca | | O | O | X | X | 338 |
| G03 | | | Pb-30%Sn- 0.02%Al | | O | O | X | X | 339 |
| G04 | | | Pb-50%Sn-0.1%Bi | | O | O | X | X | 342 |
| G05 | | | Pb-50%Sn- 0.01%Se | | O | O | X | X | 340 |
| G06 | | | Pb-50%Sb-0.1%As | | O | O | X | X | 347 |

The experiment (1.6) shown above was performed on manufactured lead-acid batteries. The results are shown below.

The rightmost columns of table 1, 2 and 3 show the results of cycle life performance of manufactured lead-acid batteries. These results are relative values with the lowest life cycle number of lead-acid battery manufactured by using a negative electrode current collector with completely no surface layer being 100.

The cycle life performance of lead-acid batteries by using a negative electrode current collector with a surface layer on any parts was better than that of lead-acid batteries by using a negative electrode current collector with no surface layer on any parts. Especially, the cycle life performance of lead-acid batteries manufactured by using a negative electrode current collector with a surface layer on only lug part and upper frame part was quite excellent.

This tendency was observed both cases in the rolling method and hot-dip plating method to form a surface layer. Additionally, this tendency was observed in both cases that a surface layer was made of tin or antimony.

The effect of alloy composition of a surface layer on cycle life performance will now be explained. As shown in the rightmost column of table 1, 2 and 3, cycle life performance was better when a surface layer is an alloy of Pb and Sn and the mass ratio of Sn accounts for 10% or more in the whole alloy, an alloy of Pb and Sb and the mass ratio of Sb accounts for 10% or more in the whole alloy, an alloy of Pb, Sn and Sb and the total mass ratio of Sn and Sb accounts for 10% or more in the whole alloy, Sn, or Sb. Additionally, the same effect can be obtained a surface layer contain other elements such as Ca, Al, Bi, Se or As. It is supposed that Sn or Sb contained in a surface layer impact positively.

After examination, lead-acid batteries were broken up and investigated. In lead-acid batteries manufactured by using a negative electrode current collector with either one of lug part or upper frame covered with no surface layer, moss adhered to the parts with no surface layer. Further, accumulated moss was observed. It is probable that accumulation of moss affects the cycle life performance.

Meanwhile, the cycle life performance was not improved in lead-acid batteries using a negative electrode current collector with not only lug part and upper frame part but also other parts covered with surface layer. In that case, it is supposed that other factors affected the cycle life performance. The cause will be explained in detail in embodiment 3. It is expected that materials such as Sn and Sb used as surface layer may function as a factor for reducing electrolyte solution of lead-acid batteries as charge and discharge cycle proceeds.

### (3) Embodiment 2

Negative electrode current collectors were manufactured by gravity casting method. The negative electrode current collector is made of an alloy of Pb-0.05%Ca-0.5%Sn. Then, surface layer was formed on various part of negative electrode current collectors by the hot-dip plating method. Table 4 and 5 show the overview of various negative electrode current collectors as a whole. Lead-acid batteries were manufactured by using these negative electrode current collectors. The methods for manufacturing items other than negative electrode current collector are shown above.

**Table 4**

| | Negative electrode current collector | | Surface layer | | | | | | | Cycle life performance |
|---|---|---|---|---|---|---|---|---|---|---|
| | Manufacturing method | Alloy composition | Composition | Method to form surface layer | Lug part | Upper frame part | Grid part | Lower frame part | Side frame part | |
| H01 | Gravity casting method | Pb-0.05%-0.5%Sn | Sn | Hot-dip plating method | O | X | X | X | X | 126 |
| H02 | | | | | X | O | X | X | X | 124 |
| H03 | | | | | X | X | O | X | X | 121 |
| H04 | | | | | X | X | X | O | X | 120 |
| H05 | | | | | X | X | X | X | O | 104 |
| H06 | | | | | O | O | X | X | X | 342 |
| H07 | | | | | O | O | O | X | X | 129 |
| H08 | | | | | X | X | O | O | O | 124 |
| H09 | | | | | X | X | O | O | O | 119 |
| H10 | | | | | X | O | O | O | O | 118 |
| H11 | | | | | O | O | O | O | O | 111 |
| I01 | Gravity casting method | Pb-0.05%-0.5%Sn | Sb | Hot-dip plating method | O | X | X | X | X | 123 |
| I02 | | | | | X | O | X | X | X | 120 |
| I03 | | | | | X | X | O | X | X | 118 |
| I04 | | | | | X | X | X | O | X | 118 |
| I05 | | | | | X | X | X | X | O | 102 |
| I06 | | | | | O | O | X | X | X | 352 |
| I07 | | | | | O | O | O | X | X | 127 |
| I08 | | | | | X | X | O | O | O | 123 |
| I09 | | | | | X | X | O | O | O | 116 |
| I10 | | | | | X | O | O | O | O | 117 |
| I11 | | | | | O | O | O | O | O | 110 |

**Table 5**

| | Negative electrode current collector | | Surface layer | | | | | | | Cycle life performance |
|---|---|---|---|---|---|---|---|---|---|---|
| | Manufacturing method | Alloy composition | Composition | Method to form surface layer | Lug part | Upper frame part | Grid part | Lower frame part | Side frame part | |
| J01 | Gravity casting method | Pb-0.05%Ca-0.5%Sn | Pb-5%Sn | Hot-dip plating method | O | O | X | X | X | 210 |
| J02 | | | Pb-8%Sn | | O | O | X | X | X | 212 |
| J03 | | | Pb-10%Sn | | O | O | X | X | X | 321 |
| J04 | | | Pb-30%Sn | | O | O | X | X | X | 329 |
| J05 | | | Pb-50%Sn | | O | O | X | X | X | 327 |
| J06 | | | Pb-70%Sn | | O | O | X | X | X | 324 |
| K01 | Gravity casting method | Pb-0.05%Ca-0.5%Sn | Pb-5%Sb | Hot-dip plating method | O | O | X | X | X | 212 |
| K02 | | | Pb-8%Sb | | O | O | X | X | X | 208 |
| K03 | | | Pb-10%Sb | | O | O | X | X | X | 328 |
| K04 | | | Pb-30%Sb | | O | O | X | X | X | 327 |
| K05 | | | Pb-50%Sb | | O | O | X | X | X | 329 |
| K06 | | | Pb-70%Sb | | O | O | X | X | X | 331 |
| L01 | Gravity casting method | Pb-0.05%Ca-0.5%Sn | Pb-5%Sn-5%Sb | Hot-dip plating method | O | O | X | X | X | 326 |
| L02 | | | Pb-10%Sn- 0.05%Ca | | O | O | X | X | X | 325 |
| L03 | | | Pb-30%Sn- 0.02%Al | | O | O | X | X | X | 324 |
| L04 | | | Pb-50%Sn-0.01%Bi | | O | O | X | X | X | 329 |
| L05 | | | Pb-50%Sn-0.01%Se | | O | O | X | X | X | 328 |
| L06 | | | Pb-50%Sb-0.1%As | | O | O | X | X | X | 327 |

The experiment (1.6) shown above was performed on manufactured lead-acid batteries. The results are shown below.

The rightmost columns of table 4 and 5 show the results of cycle life performance of manufactured lead-acid batteries. These results are relative values with the lowest life cycle number of lead-acid battery manufactured by using a negative electrode current collector with completely no surface layer being 100.

In the experiment results, the same tendency as embodiment 1 was observed. The cycle life performance of lead-acid batteries by using a negative electrode current collector with a surface layer only on lug part and upper frame part was very excellent even if the negative electrode current collector manufactured by the gravity casting method. It became clear that cycle life performance was better when a surface layer is an alloy of Pb and Sn and the mass ratio of Sn accounts for 10% or more in the whole alloy, an alloy of Pb and Sb and the mass ratio of Sb accounts for 10% or more in the whole alloy, an alloy of Pb, Sn and Sb and the total mass ratio of Sn and Sb accounts for 10% or more in the whole alloy, Sn, or Sb.

As shown above, it is apparent that a negative electrode current collector manufactured either by the expanding method or gravity casting method provides the effect of the present invention.

### (4) Embodiment 3

In some cases, it is difficult to form a surface layer on only the lug part and upper frame part during the production process. Therefore, the effect of parts other than the lug part and upper frame part partially covered with a surface layer on cycle life performance was investigated as follows.

Negative electrode current collectors with surface layer of Pb-50%Sn or Pb-50%Sb on only upper frame part and lug part by the rolling method were manufactured. The thickness of the surface layer was 50 microns. A surface layer was formed on the parts of this negative electrode current collector other than lug part and upper frame part by the hot-dip plating method.

Lead-acid batteries were manufactured by using these negative electrode current collectors. The methods for manufacturing items other than negative electrode current collector are shown above.

**Table 6**

| | Negative electrode current collector | | Surface layer | | | | | Cycle life performance | Amount of reduced liquid |
|---|---|---|---|---|---|---|---|---|---|
| | Manufacturing method | Alloy composition | Composi tion | Method to form surface layer | Lug part | Upper frame part | The ratio of areas covered with the second surface layer to the areas other than the lug part and upper frame part (%) | | |
| M01 | Gravity casting method | Pb-0.05%Ca-0.5%Sn | Pb-50%Sn | Hot-dip plating method | O | O | 0 | 320 | 101 |
| M02 | | | | | O | O | 10 | 317 | 105 |
| M03 | | | | | O | O | 15 | 314 | 106 |
| M04 | | | | | O | O | 20 | 313 | 107 |
| M05 | | | | | O | O | 25 | 150 | 129 |
| M06 | | | | | O | O | 30 | 137 | 137 |
| N01 | Gravity casting method | Pb-0.05%Ca-0.5%Sn | | Hot-dip plating method | O | O | 0 | 320 | 102 |
| N02 | | | | | O | O | 10 | 320 | 106 |
| N03 | | | Pb- | | O | O | 15 | 325 | 105 |
| N04 | | | 50%Sb | | O | O | 20 | 312 | 109 |
| N05 | | | | | O | O | 25 | 140 | 134 |
| N06 | | | | | O | O | 30 | 102 | 149 |
| 001 | Gravity casting method | Pb-0.05%Ca-0.5%Sn | Pb-50%Sn | Rolling method | O | O | 0 | 324 | 101 |
| 002 | | | | | O | O | 10 | 320 | 104 |
| 003 | | | | | O | O | 15 | 319 | 105 |
| 004 | | | | | O | O | 20 | 317 | 105 |
| 005 | | | | | O | O | 25 | 136 | 137 |
| 006 | | | | | O | O | 30 | 132 | 141 |
| P01 | Expandng method | Pb-0.05%Ca-0.5%Sn | Pb-50%Sb | Hot-dip plating method | O | O | 0 | 328 | 102 |
| P02 | | | | | O | O | 10 | 326 | 105 |
| P03 | | | | | O | O | 15 | 315 | 105 |
| P04 | | | | | O | O | 20 | 312 | 107 |
| P05 | | | | | O | O | 25 | 135 | 135 |
| P06 | | | | | O | O | 30 | 128 | 140 |

The experiment (1.6) shown above was performed. The results are shown below.

The second rightmost column of table 6 shows the results of cycle life performance of manufactured lead-acid batteries. These results are relative values with the lowest life cycle number of lead-acid battery manufactured by using a negative electrode current collector with completely no surface layer being 100.

If the ratio of the area other than upper frame part and lug part covered with a surface layer (the second layer) to the parts other than upper frame part and lug part is 20% or less, the cycle life performance was almost the same as the case where a surface layer covered only lug part and upper frame part and excellent. This tendency was the same for the composition of the surface layer was Pb-50%Sn or Pb-50%Sb. However, if the ratio of the area other than upper frame part and lug part covered with a surface layer (the second layer) to the parts other than upper frame part and lug part is more than 20%, the cycle life performance was lower than the case where a surface layer covered only lug part and upper frame part.

As a result of breaking up lead-acid batteries after the experiment, electrolyte solution was reduced in batteries with poor cycle life performance. It is supposed that reduction of electrolyte solution according to charge and discharge cycle exerts a harmful influence on the cycle life performance. The larger the ratio of surface area other than upper frame part and lug part covered with a surface layer to the surface area other than upper frame part and lug part got, the more electrolyte solution was reduced. The reduction of electrolyte was calculated from differences in mass of lead-acid batteries before and after the cycle life test. These results are relative values with the lowest life cycle number of lead-acid battery manufactured by using a negative electrode current collector with completely no surface layer being 100 and shown in the rightmost columns of table 6.

As a result of embodiment 1 to 3, it has become apparent that (i) excellent cycle life performance is obtained if the part other than the lug part and upper frame part has no surface layer, and (ii) the effect for improving cycle life performance is not reduced if the ratio of area covered with the second surface layer to the part other than lug part and upper frame part is 20% or less even when the part other than lug part and upper frame part have a surface layer (the second surface layer).

The present application is based on the Japanese Patent Application (No. 2004-324343) applied for on November 8, 2004.

### Industrial applicability

As shown above, according to the present invention, the upper frame part and lug part have a surface layer with a certain composition in a negative electrode current collector for a lead-acid battery having a grid part, upper frame part, and lug part. A lead-acid battery shows excellent cycle life performance by manufacturing the lead-acid battery using this negative electrode current collector. Lead-acid batteries are used in various industries. The present invention, therefore, is industrially applicable, and its industrial advantage is extremely large.

## Claims

1. A negative electrode current collector for a lead-acid battery comprising a grid part, an upper frame part, and a lug part, wherein;
said upper frame part and said lug part have a surface layer,
said surface layer is an alloy of Pb and Sn and the mass ratio of Sn accounts for 10% or more in the whole alloy, an alloy of Pb and Sb and the mass ratio of Sb accounts for 10% or more in the whole alloy, an alloy of Pb, Sn and Sb and the total mass ratio of Sn and Sb accounts for 10% or more in the whole alloy, Sn, or Sb.

2. A negative electrode current collector for a lead-acid battery according to claim 1, wherein;
a part other than said upper frame part and said lug part has a surface layer,
a ratio of the area covered with the surface layer to a surface area of said part other than said upper frame part and said lug part is 20% or less.

3. A lead-acid battery comprising the negative electrode current collector for a lead-acid battery according to claim 1 or 2.

## Patentansprüche

1. Negativelektrode-Stromabnehmer für eine Blei-Säure-Batterie, umfassend einen Gitterteil, einen oberen Rahmenteil und einen Anschlußteil, wobei
der obere Rahmenteil und der Anschlußteil eine Oberflächenschicht aufweisen, wobei
die Oberflächenschicht eine Legierung von Pb und Sn ist und das Gewichtsverhältnis von Sn 10% oder mehr bezogen auf die gesamte Legierung beträgt, eine Legierung aus Pb und Sb ist und das Gewichtsverhältnis von Sb 10% oder mehr bezogen auf die gesamte Legierung beträgt, eine Legierung aus Pb, Sn und Sb ist und das Gesamtgewichtsverhältnis von Sn und Sb 10% oder mehr bezogen auf die gesamte Legierung beträgt, Sn ist oder Sb ist.

2. Negativelektrode-Stromabnehmer für eine Blei-Säure-Batterie nach Anspruch 1, wobei
ein anderer Teil als der obere Rahmenteil und der Anschlußteil eine Oberflächenschicht aufweist, wobei
das Verhältnis des mit der Oberflächenschicht bedeckten Bereichs zu einem Oberflächenbereich des anderen Teils als der obere Rahmenteil und der Anschlußteil 20% oder weniger beträgt.

3. Blei-Säure-Batterie, umfassend den Negativelektroden-Stromabnehmer für eine Blei-Säure-Batterie nach Anspruch 1 oder 2.

## Revendications

1. Collecteur de courant d'électrode négative pour batterie au plomb comprenant une partie de grille, une partie de cadre supérieur et une partie de cosse, dans lequel :
ladite partie de cadre supérieur et ladite partie de cosse possèdent une couche superficielle,
ladite couche superficielle est un alliage de Pb et de Sn et le rapport de masse du Sn représente 10 % ou plus de la totalité de l'alliage, un alliage de Pb et de Sb et le rapport de masse du Sb représente 10 % ou plus de la totalité de l'alliage, un alliage de Pb, de Sn et de Sb et le rapport de masse total de Sn et de Sb représente 10 % ou plus de la totalité de l'alliage, Sn ou Sb.

2. Collecteur de courant d'électrode négative pour batterie au plomb selon la revendication 1, dans lequel :
une partie autre que ladite partie de cadre supérieur et de ladite partie de cosse possède une couche superficielle
un rapport de la zone couverte par la couche superficielle sur une surface de ladite partie autre que ladite partie de cadre supérieur et de ladite partie de cosse est inférieur ou égal à 20 %.

3. Batterie au plomb comprenant le collecteur de courant d'électrode négative pour une batterie au plomb selon la revendication 1 ou 2.
